# EUROPÄISCHE PATENTANMELDUNG

(11) **EP 2 573 472 A2**
(43) Veröffentlichungstag der Anmeldung: **27.03.2013**
(21) Anmeldenummer: 12184867.5
(22) Anmeldetag: 18.09.2012
(51) Int. Cl.: F24D 11/02, F24D 19/10

(54) **Wärmeanlage mit Wärmepumpe und Verfahren zum Betreiben einer Wärmeanlage mit Wärmepumpe**

(30) Priorität: 26.09.2011 DE 102011083393
(71) Anmelder: Siemens Aktiengesellschaft, 80333 München (DE)
(72) Erfinder: Schäfer, Jochen, Dr., 90408 Nürnberg (DE)

(57) **Zusammenfassung**

Die Erfindung betrifft eine Wärmeanlage (10), umfassend
- eine Wärmepumpe (11) umfassend
einen Verdampfer (18),
einen elektrisch angetriebenen Verdichter (19),
einen Verflüssiger (20);
- einen Abwärmekreislauf (12), der an den Verdampfer (18) gekoppelt ist;
- einen Nutzwärmekreislauf (13), der an den Verflüssiger (20) gekoppelt ist;
- wenigstens einen Wärmespeicher (14, 26);

wobei
- wenigstens einer der Wärmespeicher (14) im Abwärmekreislauf (12) und/oder wenigstens einer der Wärmespeicher (26) im Nutzwärmekreislauf (13) angeordnet ist.

Die Erfindung betrifft weiter ein Verfahren zum Betreiben einer Wärmeanlage (10).

## Beschreibung

Die Erfindung betrifft eine Wärmeanlage gemäß dem Oberbegriff des Anspruchs 1 und ein Verfahren zum Betreiben einer Wärmeanlage.

Eine Wärmepumpe ist eine Maschine, die unter Aufwendung von Antriebsenergie, beispielsweise durch einen elektrischen Antrieb bereitgestellte mechanische Energie, Wärme oder thermische Energie aus einem Reservoir oder einer Wärmequelle mit niedriger Temperatur aufnimmt und, vermehrt um die aufgewendete Energie, als Nutzwärme auf ein zweites Reservoir oder eine Wärmesenke mit höherer Temperatur überträgt. Im Stand der Technik sind unterschiedliche Bauformen der Wärmepumpe bekannt, beispielsweise die so genannte Kompressionswärmepumpe, die mit einem mechanischen Antrieb arbeitet, und die so genannte Absorptionswärmepumpe, die mit einem thermischen Antrieb arbeitet. Bei der elektrisch angetriebenen Kompressionswärmepumpe wird der mechanische Antrieb, der die aufgewendete Energie liefert, von einem Elektromotor erbracht, der den für die Kompression des Arbeitsmediums, insbesondere Kältemittels zuständigen Verdichter der Wärmepumpe antreibt.

Ein besonders interessantes Einsatzgebiet für Wärmepumpen ist die Abwärmenutzung, bei der die niedrige Temperatur der Abwärme von beispielsweise 40°C auf die für die Nutzwärme notwendige hohe Temperatur von beispielsweise 95°C angehoben wird. Dies eignet sich beispielsweise für die Bereitstellung von Prozesswärme in der Prozessindustrie sowie von Wärme für das Heizen von Gebäuden und die Heißwasserbereitung in Krankenhäusern und Hotels. In den genannten Fällen liegt der Wärmebedarf auf einem mittleren Temperaturniveau von ungefähr 80°C bis ungefähr 140°C. Die Wirtschaftlichkeit solcher Prozesse ist in entscheidendem Maße von den Stromkosten abhängig, die für den elektrischen Antrieb des Verdichters anfallen.

Bedingt durch die starke Zunahme der installierten Stromerzeugungsleistung unter Verwendung erneuerbarer Energien, die in der Regel wetterbedingt stark fluktuieren, gibt es zukünftig zur Sicherstellung der Stromnetzstabilität unter Anderem einen erheblichen Bedarf an elektrischen Lasten, die flexibel auf die wetterabhängige Stromerzeugung reagieren können. In Zukunft werden flexible elektrische Verbraucher Strom zu deutlich günstigeren Konditionen beziehen können als nichtflexible elektrische Verbraucher.

Im Stand der Technik sind Wärmeanlagen gemäß dem Oberbegriff des Anspruchs 1 beispielsweise von Wärmepumpenheizungen bekannt, die eine Grundwasserwärmepumpe umfassen, die als elektrisch angetriebene Kompressionswärmepumpe ausgeführt ist. Das Grundwasser bildet demnach eine Abwärmequelle, die kontinuierlich Abwärme mit niedriger Temperatur liefert.

Diese bekannte Wärmeanlage kann zwar im Hinblick auf zeitlich schwankende Stromkosten diskontinuierlich betrieben werden, indem beispielsweise der elektrisch angetriebene Verdichter nur dann läuft, wenn preisgünstiger Nachtstrom zur Verfügung steht, aber sonst, wenn also der Strom mehr kostet, steht. Jedoch führt dies zu merklichen Nutzungseinschränkungen und Komforteinbußen, da die bekannte Wärmeanlage außerhalb der wirtschaftlich günstigen Betriebszeitfenster keine Nutzwärme liefern kann. Falls andererseits die bekannte Wärmeanlage außerhalb dieser wirtschaftlich günstigen Betriebszeitfenster betrieben wird, so können die Betriebskosten stark ansteigen.

Die Aufgabe der Erfindung besteht darin, bei einer Wärmeanlage gemäß dem Oberbegriff des Anspruchs 1 und einem Verfahren zum Betreiben einer Wärmeanlage einen diskontinuierlichen Betrieb des Verdichters mit erhöhter Wirtschaftlichkeit zu ermöglichen.

Diese Aufgabe wird durch eine Wärmeanlage gemäß Anspruch 1 und ein Verfahren zum Betreiben einer Wärmeanlage gemäß Anspruch 16 gelöst. Weitere Ausführungsformen sind in den Unteransprüchen beschrieben.

Die Erfindung schlägt gemäß einem ersten Aspekt eine Wärmeanlage vor, umfassend
- eine Wärmepumpe umfassend
   einen Verdampfer,
   einen elektrisch angetriebenen Verdichter,
   einen Verflüssiger;
- einen Abwärmekreislauf, der an den Verdampfer gekoppelt ist;
- einen Nutzwärmekreislauf, der an den Verflüssiger gekoppelt ist;
- wenigstens einen Wärmespeicher;
   wobei
- wenigstens einer der Wärmespeicher im Abwärmekreislauf und/oder wenigstens einer der Wärmespeicher im Nutzwärmekreislauf angeordnet ist.

Der wenigstens eine Wärmespeicher ermöglicht eine bedarfsgerechte, d.h. auf die Bedürfnisse des Wärmenutzers angepasste Bereitstellung von Nutzwärme sogar bei diskontinuierlichem Betrieb außerhalb der Bedarfszeiten, sodass die Wirtschaftlichkeit der Wärmebereitstellung erhöht werden kann, ohne dass es zu Komforteinbußen oder Nutzungsbeschränkungen kommen muss.

Denn zum Einen kann der Wärmespeicher, der im Abwärmekreislauf angeordnet ist, außerhalb der Betriebszeiten der Wärmepumpe, wenn also der Verdichter beispielsweise wegen zu hoher aktueller Stromkosten steht, zumindest einen Teil eines Abwärme transportierenden Wärmemediums aufnehmen, wodurch Abwärme gespeichert wird, und er kann dann während des Betriebs der vorgeschlagenen Wärmeanlage, wenn also der Verdichter läuft, Wärmemedium abgeben, wodurch gespeicherte Abwärme in den Abwärmekreislauf gespeist wird. Somit kann die vorgeschlagene Wärmeanlage im Vergleich zu der bekannten Wärmeanlage auf ein deutlich größeres Abwärmenutzungspotential zugreifen, da zu dem kontinuierlichen Abwärmestrom noch die aus dem Wärmespeicher in den Abwärmekreislauf gespeiste Abwärme hinzukommt. Dies führt zu erhöhten Abwärmenutzungsgraden der vorgeschlagenen Wärmeanlage, wodurch die Wirtschaftlichkeit erhöht wird.

Denn zum Anderen kann der Wärmespeicher, der im Nutzwärmekreislauf angeordnet ist, während des Betriebs der vorgeschlagenen Wärmeanlage, wenn also der Verdichter läuft, zumindest einen Teil eines Nutzwärme transportierenden Wärmemediums aufnehmen, wodurch Nutzwärme gespeichert wird, und dann außerhalb der Betriebszeiten der Wärmepumpe, wenn also der Verdichter beispielsweise wegen zu hoher aktueller Stromkosten steht, bei Bedarf Wärmemedium abgeben, wodurch gespeicherte Nutzwärme in den Nutzwärmekreislauf gespeist wird. Somit ermöglicht die vorgeschlagene Wärmeanlage im Vergleich zu der bekannten Wärmeanlage eine bedarfsgerechte, insbesondere kontinuierliche oder diskontinuierliche, zu den Betriebszeiten zeitversetzte Bereitstellung von Nutzwärme zu günstigeren Betriebskosten, da die Wärmeanlage nicht mit teuerem Strom betrieben werden muss, um Nutzwärme liefern zu können. Auch in diesem fall wird die Wirtschaftlichkeit ohne Komforteinbußen und Nutzungsbeschränkungen erhöht.

Ein weiterer Vorteil des Wärmespeichers im Abwärmekreislauf liegt darin, dass der Anteil der Wärmepumpenleistung an der thermischen Gesamtleistung der vorgeschlagenen Wärmeanlage im Vergleich zu der bekannten Wärmeanlage deutlich erhöht ist.

Die vorgeschlagene Wärmeanlage kann nach Bedarf beliebig ausgebildet sein und beispielsweise wenigstens eine weitere Wärmepumpe und/oder wenigstens einen weiteren Abwärmekreislauf und/oder wenigstens einen weiteren Nutzwärmekreislauf und/oder wenigstens einen weiteren Wärmespeicher umfassen.

Jede Wärmepumpe kann nach Bedarf auf beliebige Art und Weise ausgebildet sein und beispielsweise einen weiteren Verdichter und/oder einen weiteren Verdampfer und/oder einen weiteren Verflüssiger und/oder wenigstens eine Drossel umfassen.

Jeder weitere Verdichter kann nach Bedarf auf beliebige Art und Weise ausgebildet sein, insbesondere als elektrisch angetriebener Verdichter oder als thermischer Verdichter, wie er beispielsweise in Absorptionswärmepumpen verwendet wird. Falls die Wärmepumpe einen derartiger thermischen Verdichter zusätzlich zu dem elektrisch angetriebenen Verdichter umfasst, so wird diese üblicherweise auch als Hybridwärmepumpe bezeichnet.

Der elektrisch angetriebene Verdichter kann nach Bedarf auf beliebige Art und Weise ausgebildet sein und beispielsweise zusätzlich von einem Verbrennungsmotor angetrieben werden.

Jeder Wärmespeicher kann nach Bedarf auf beliebige Art und Weise ausgebildet sein, beispielsweise als sensibler Wärmespeicher, Latentwärmespeicher, Dampfspeicher, thermochemischer Speicher oder thermophysikalischer Speicher.

Es kann vorgesehen sein, dass
- ein erster Wärmespeicher im Abwärmekreislauf angeordnet ist;
- der Abwärmekreislauf durch einen ersten Prozessfluidkreislauf gebildet wird, in dem ein Prozessfluid fließt;
- das Prozessfluid das Speichermedium des ersten Wärmespeichers darstellt.

Bei diesem ersten Wärmespeicher erfolgt somit eine direkte Wärmeübertragung, d.h. ein direktes Ein- und Ausströmen des Prozessfluids in den Wärmespeicher. Dies ist vorteilhaft, falls nur eine Abwärmequelle vorhanden ist oder bei wenigstens zwei Abwärmequellen, deren Prozessfluide die gleiche Zusammensetzung haben.

Die Wärmeanlage kann weiter umfassen
- einen Prozesswärmeübertrager;
   wobei
- ein erster Wärmespeicher im Abwärmekreislauf angeordnet ist;
- der Abwärmekreislauf durch einen ersten Prozessfluidkreislauf, in dem ein Prozessfluid fließt, und einen Abwärmeträgerkreislauf gebildet wird, in dem ein Abwärmeträger fließt;
- der Prozesswärmeübertrager an den ersten Prozessfluidkreislauf und den Abwärmeträgerkreislauf gekoppelt ist;
- der Abwärmeträger oder das Prozessfluid das Speichermedium des ersten Wärmespeichers darstellt.

Bei diesem ersten Wärmespeicher erfolgt somit eine indirekte Wärmeübertragung, d.h. eine Übertragung der Wärmeströme des Prozessfluids auf das Speichermedium mittels des Prozesswärmeübertragers. Dies ist vorteilhaft bei wenigstens zwei Abwärmequellen mit Prozessfluiden unterschiedlicher Zusammensetzung, und weil das tatsächliche Wärmepotential genutzt werden kann, ohne dass Verluste durch Wärmeübertrager endlichen Ausmaßes auftreten.

Dabei kann gemäß einer ersten Alternative vorgesehen sein, dass der erste Wärmespeicher den Prozesswärmeübertrager bildet oder enthält.

Dann umfasst dieser erste Wärmespeicher bevorzugt innere Rohrschlangen, die den Prozesswärmeübertrager bilden.

Gemäß einer zweiten Alternative kann vorgesehen sein, dass
- der Prozesswärmeübertrager separat von dem ersten Wärmespeicher ausgebildet ist;
- der erste Wärmespeicher im ersten Prozessfluidkreislauf oder im Abwärmeträgerkreislauf angeordnet ist.

Dann kann dieser erste Wärmespeicher beispielsweise zwei Speicherbehälter umfassen, die im ersten Prozessfluidkreislauf vor und hinter dem Prozesswärmeübertrager bzw. im Abwärmeträgerkreislauf vor und hinter dem Verdampfer angeordnet sind. Dieser erste Wärmespeicher ist technisch einfach aufgebaut und ermöglicht hohe Be- und Entladeströme, die beiden Speicherbehälter nehmen jedoch relativ viel Platz ein. Alternativ hierzu kann der erste Wärmespeicher beispielsweise auch als Schichtspeicher ausgeführt sein, der bevorzugt im ersten Prozessfluidkreislauf vor dem Prozesswärmeübertrager bzw. im Nutzwärmeträgerkreislauf vor dem Verdampfer angeordnet ist. Dieser Wärmespeicher hat einen geringeren Platzbedarf, allerdings sind weitere Einbauten zur Sicherstellung der Schichtung bei hohen Be- und Entladeströmen erforderlich.

Es kann vorgesehen sein, dass
- ein zweiter Wärmespeicher im Nutzwärmekreislauf angeordnet ist;
- der Nutzwärmekreislauf durch einen zweiten Prozessfluidkreislauf gebildet wird, in dem ein Prozessfluid fließt;
- das Prozessfluid das Speichermedium des zweiten Wärmespeichers darstellt.

Auch bei diesem zweiten Wärmespeicher erfolgt somit eine direkte Wärmeübertragung.

Die Wärmeanlage kann weiter umfassen
- einen Nutzwärmeübertrager;
   wobei
- ein zweiter Wärmespeicher im Nutzwärmekreislauf angeordnet ist;
- der Nutzwärmekreislauf durch einen Nutzwärmeträgerkreislauf, in dem ein Nutzwärmeträger fließt, und einen zweiten Prozessfluidkreislauf gebildet wird, in dem ein Prozessfluid fließt;
- der Nutzwärmeübertrager an den Nutzwärmeträgerkreislauf und den zweiten Prozessfluidkreislauf gekoppelt ist;
- der Nutzwärmeträger oder das Prozessfluid das Speichermedium des zweiten Wärmespeichers darstellt.

Auch bei diesem zweiten Wärmespeicher erfolgt somit eine indirekte Wärmeübertragung.

Dabei kann gemäß einer ersten Alternative vorgesehen sein, dass der zweite Wärmespeicher den Nutzwärmeübertrager bildet oder enthält.

Dann umfasst auch dieser zweite Wärmespeicher bevorzugt innere Rohrschlangen, die den Nutzwärmeübertrager bilden.

Gemäß einer zweiten Alternative kann vorgesehen sein, dass
- der Nutzwärmeübertrager separat von dem zweiten Wärmespeicher ausgebildet ist;
- der zweite Wärmespeicher im zweiten Prozessfluidkreislauf oder im Nutzwärmeträgerkreislauf angeordnet ist.

Dann kann auch dieser zweite Wärmespeicher beispielsweise zwei Speicherbehälter umfassen, die im zweiten Prozessfluidkreislauf vor und hinter dem Nutzwärmeübertrager bzw. im Nutzwärmeträgerkreislauf vor und hinter dem Verflüssiger angeordnet sind, oder alternativ beispielsweise als Schichtspeicher ausgeführt sein, der bevorzugt im zweiten Prozessfluidkreislauf hinter dem Nutzwärmeübertrager bzw. im Nutzwärmeträgerkreislauf hinter dem Verflüssiger angeordnet ist.

Die Wärmeanlage kann weiter umfassen eine Steuereinheit, die zumindest mit dem Verdichter verbunden ist.

Die Steuereinheit kann den Betrieb des Verdichters steuern und ihn insbesondere einschalten oder starten und ausschalten oder stoppen.

Die Steuereinheit kann nach Bedarf auf beliebige Art und Weise ausgebildet sein, beispielsweise derart, dass sie zumindest den Verdichter in Abhängigkeit von einem Zeitplan und/oder einem Stromtarif ansteuert.

Hierdurch wird ein wirtschaftlicher Betrieb des Verdichters und damit der Wärmepumpe und damit der Wärmeanlage möglich. Es kann vorgesehen sein, dass
- die Steuereinheit eine Kommunikationsschnittstelle zu einer Strompreisquelle umfasst, die einen aktuellen Strompreis bereitstellt;
- die Steuereinheit derart ausgebildet ist, dass sie zumindest den Verdichter in Abhängigkeit von dem aktuellen Strompreis ansteuert.

Hierdurch wird ein wirtschaftlicher Betrieb des Verdichters und damit der Wärmepumpe und damit der Wärmeanlage ermöglicht.

Alternativ oder zusätzlich kann vorgesehen sein, dass
- die Steuereinheit eine Kommunikationsschnittstelle zu einer Strompreisquelle umfasst, die die zukünftigen Strompreise für einen zukünftigen vorbestimmten Zeitraum, beispielsweise der nächsten 24 h, bereitstellt;
- die Steuereinheit derart ausgebildet ist, dass sie zumindest den Verdichter in Abhängigkeit von den zukünftigen Strompreisen ansteuert.

Dann kann bevorzugt vorgesehen sein, dass
- die Steuereinheit derart ausgebildet ist, dass sie
   - eine Strompreisprognose unter Verwendung der zukünftigen Strompreise erstellt;
   - ein zeitliches Modell der Wärmequelle und der Wärmesenke enthält, beispielsweise hinterlegt in einem Datenspeicher;
   - einen Fahrplan für den Verdichter auf Basis der Strompreisprognose sowie des zeitlichen Modells der Wärmequelle und der Wärmesenke erstellt, bevorzugt durch eine modellbasierte Optimierung;
   - zumindest den Verdichter entsprechend dem Fahrplan ansteuert.

Dann kann zusätzlich vorgesehen sein, dass
- die Steuereinheit derart ausgebildet ist, dass sie
   - ein zeitliches Modell der Wärmespeicher enthält, beispielsweise hinterlegt in einem Datenspeicher;
   - den Fahrplan für den Verdichter auf Basis des zeitlichen Modells der Wärmespeicher erstellt, bevorzugt durch eine modellbasierte Optimierung.

Die Erfindung schlägt gemäß einem zweiten Aspekt ein Verfahren zum Betreiben einer Wärmeanlage, wobei die Wärmeanlage umfasst
- eine Wärmepumpe umfassend
   einen Verdampfer,
   einen elektrisch angetriebenen Verdichter,
   einen Verflüssiger;
- einen Abwärmekreislauf, der an den Verdampfer gekoppelt ist;
- einen Nutzwärmekreislauf, der an den Verflüssiger gekoppelt ist;
   wobei
- der Verdichter diskontinuierlich betrieben wird;
- bei stehendem Verdichter Abwärme aus dem Abwärmekreislauf gespeichert und/oder gespeicherte Nutzwärme in den Nutzwärmekreislauf gespeist wird;
- bei laufendem Verdichter gespeicherte Abwärme in den Abwärmekreislauf gespeist und/oder Nutzwärme aus dem Nutzwärmekreislauf gespeichert wird.

Die Wärmeanlage kann nach Bedarf auf beliebige Art und Weise ausgebildet sein, beispielsweise wie eine der vorgeschlagenen Wärmeanlagen.

Es kann vorgesehen sein, dass zumindest der Verdichter in Abhängigkeit von einem Zeitplan und/oder einem Stromtarif betrieben wird.

Es kann vorgesehen sein, dass
- von einer Strompreisquelle regelmäßig ein aktueller Strompreis abgefragt wird;
- zumindest der Verdichter in Abhängigkeit von dem aktuellen Strompreis betrieben wird.

Alternativ oder zusätzlich kann vorgesehen sein, dass
- von einer Strompreisquelle die zukünftigen Strompreise für einen zukünftigen vorbestimmten Zeitraum, beispielsweise der nächsten 24 h, abgefragt werden;
- zumindest der Verdichter in Abhängigkeit von den zukünftigen Strompreisen betrieben wird.

Dann kann bevorzugt vorgesehen sein, dass
- eine Strompreisprognose unter Verwendung der zukünftigen Strompreise erstellt wird;
- ein zeitliches Modell der Wärmequelle und der Wärmesenke bereitgestellt wird;
- ein Fahrplan für den Verdichter auf Basis der Strompreisprognose sowie des zeitlichen Modells der Wärmequelle und der Wärmesenke erstellt wird, bevorzugt durch eine modellbasierte Optimierung;
- zumindest den Verdichter entsprechend dem Fahrplan betrieben wird.

Dann kann zusätzlich vorgesehen sein, dass
- ein zeitliches Modell der Wärmespeicher bereitgestellt wird;
- der Fahrplan für den Verdichter auf Basis des zeitlichen Modells der Wärmespeicher erstellt wird, bevorzugt durch eine modellbasierte Optimierung.

Die Ausführungen zu einem der Aspekte der Erfindung, insbesondere zu einzelnen Merkmalen dieses Aspektes, gelten entsprechend auch analog für die anderen Aspekte der Erfindung.

Im Folgenden werden Ausführungsformen der Erfindung beispielhaft anhand der beigefügten Zeichnungen näher erläutert werden. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

Die Zeichnungen zeigen in:
- Fig. 1: einen Schaltplan einer Wärmeanlage in einer ersten Ausführungsform;
- Fig. 2: einen Schaltplan einer Wärmeanlage in einer zweiten Ausführungsform;
- Fig. 3: einen Schaltplan einer Wärmeanlage in einer dritten Ausführungsform;
- Fig. 4: einen Schaltplan einer Wärmeanlage in einer vierten Ausführungsform;
- Fig. 5: einen Schaltplan einer Wärmeanlage in einer fünften Ausführungsform;
- Fig. 6: einen Schaltplan einer Wärmeanlage in einer sechsten Ausführungsform;
- Fig. 7: einen Schaltplan einer Wärmeanlage in einer siebenten Ausführungsform;
- Fig. 8: einen Schaltplan einer Wärmeanlage in einer achten Ausführungsform.

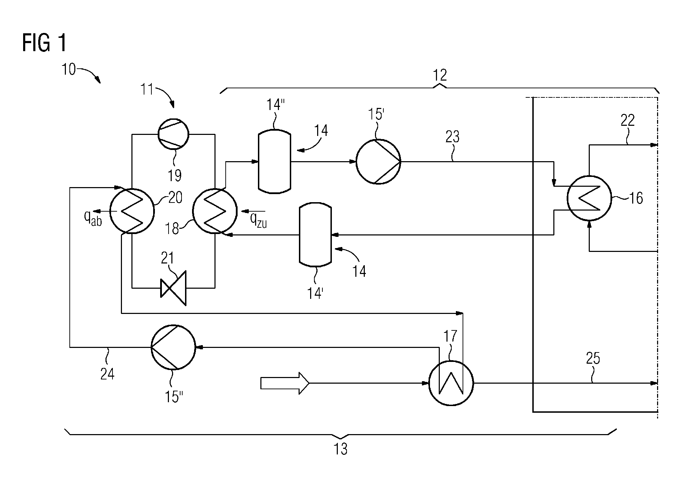

In der Fig. 1 ist eine erfindungsgemäße Wärmeanlage 10 in einer ersten Ausführungsform dargestellt. Diese Wärmeanlage 10 umfasst eine Wärmepumpe 11, einen Abwärmekreislauf 12, einen Nutzwärmekreislauf 13, einen ersten Wärmespeicher 14, zwei Pumpen 15, einen Prozesswärmeübertrager 16, einen Nutzwärmeübertrager 17 und eine nicht dargestellte Steuereinheit. Die Wärmepumpe 11 umfasst einen Verdampfer 18, einen elektrisch angetriebenen Verdichter 19, einen Kondensator oder Verflüssiger 20, eine Drossel 21 und ein Arbeitsmedium, das hier ein Kältemittel ist.

Die Steuereinheit ist an den ersten Wärmespeicher 14, die Pumpen 15 und den Verdichter 19 gekoppelt.

Bei dieser ersten Ausführungsform wird der Abwärmekreislauf 12 durch einen ersten Prozessfluidkreislauf 22, in dem ein erstes Prozessfluid fließt, und einen Abwärmeträgerkreislauf 23 gebildet, in dem ein fluider Abwärmeträger fließt und von einer 15' der Pumpen getrieben wird. Der erste Wärmespeicher 14 ist im Abwärmeträgerkreislauf 23 und somit im Abwärmekreislauf 12 angeordnet. Der Prozesswärmeübertrager 16 ist an den ersten Prozessfluidkreislauf 22 und den Abwärmeträgerkreislauf 23 gekoppelt, sodass Wärme von dem ersten Prozessfluid auf den Abwärmeträger übertragen wird. Der Abwärmeträgerkreislauf 23 und somit der Abwärmekreislauf 12 ist an den Verdampfer 18 gekoppelt, sodass Wärme von dem Abwärmeträger auf das Kältemittel übertragen wird.

Bei dieser ersten Ausführungsform ist der Prozesswärmeübertrager 16 separat von dem ersten Wärmespeicher 14 ausgebildet. Der erste Wärmespeicher 14 umfasst einen ersten Behälter 14' mit einem Ein- und einem Auslassventil, der zwischen dem Prozesswärmeübertrager 16 und dem Verdampfer 18 und somit vor dem Verdampfer 18 angeordnet ist, und einen zweiten Behälter 14" mit einem Ein- und einem Auslassventil, der zwischen dem Verdampfer 18 und dem Prozesswärmeübertrager 16 und somit hinter dem Verdampfer 18 angeordnet ist.

Die Steuereinheit ist an die Ein- und Auslassventile der Behälter 14', 14" und somit an den ersten Wärmespeicher 14 gekoppelt. Der Abwärmeträger kann durch entsprechendes Ansteuern der Ein- und Auslassventile und der Pumpe 15' in die Behälter 14', 14" eingefüllt und aus diesen entnommen werden und stellt somit das Speichermedium des ersten Wärmespeichers 14 dar.

Bei dieser ersten Ausführungsform wird der Nutzwärmekreislauf 13 wird durch einen Nutzwärmeträgerkreislauf 24, in dem ein fluider Nutzwärmeträger fließt und von der anderen Pumpe 15" getrieben wird, und einen zweiten Prozessfluidkreislauf 25 gebildet, in dem ein zweites Prozessfluid fließt. Der Nutzwärmeträgerkreislauf 24 und somit der Nutzwärmekreislauf 13 ist an den Verflüssiger 20 gekoppelt, sodass Wärme von dem Kältemittel auf den Nutzwärmeträger übertragen wird. Der Nutzwärmeübertrager 17 ist an den Nutzwärmeträgerkreislauf 24 und den zweiten Prozessfluidkreislauf 25 gekoppelt, sodass Wärme von dem Nutzwärmeträger auf das zweite Prozessfluid übertragen wird.

Bei dieser ersten Ausführungsform umfasst die Steuereinheit eine Kommunikationsschnittstelle zu einer Strompreisquelle, die einen aktuellen Strompreis bereitstellt und durch ein Internetportal gebildet wird. Die Steuereinheit ist derart ausgebildet, dass sie die Ein- und Auslassventile des ersten Wärmespeichers 14, die Pumpen 15 und den Verdichter 19 in Abhängigkeit von einem Zeitplan und einem Stromtarif und dem aktuellen Strompreis ansteuert. Alternativ oder zusätzlich können nach Bedarf weitere Einflussgrößen über eine modellbasierte Optimierung berücksichtigt werden.

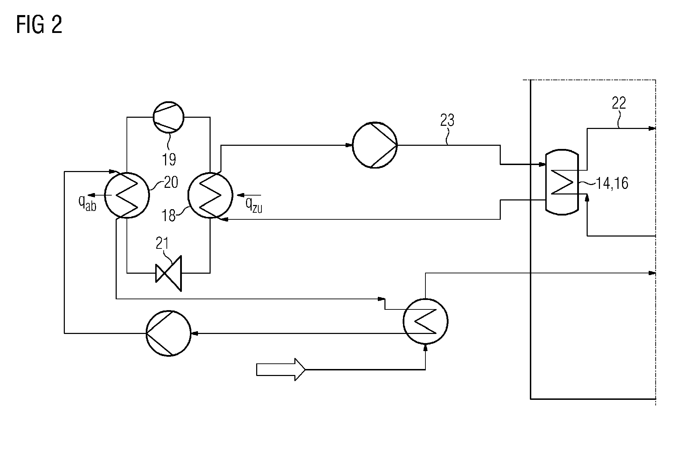

In der Fig. 2 ist eine erfindungsgemäße Wärmeanlage 10 in einer zweiten Ausführungsform dargestellt. Diese zweite Ausführungsform ähnelt der ersten Ausführungsform, sodass im Folgenden lediglich die Unterschiede ausführlicher beschrieben werden.

Bei dieser zweiten Ausführungsform umfasst der erste Wärmespeicher 14 lediglich einen Behälter mit einem Ein- und einem Auslassventil, die an die Steuereinheit angekoppelt sind, und innere Rohrschlangen, die in dem Behälter angeordnet und an den ersten Prozessfluidkreislauf 22 angeschlossen sind. Somit bildet und enthält der erste Wärmespeicher 14 den Prozesswärmeübertrager 16. Der erste Wärmespeicher 14 ist als Schichtspeicher ausgebildet.

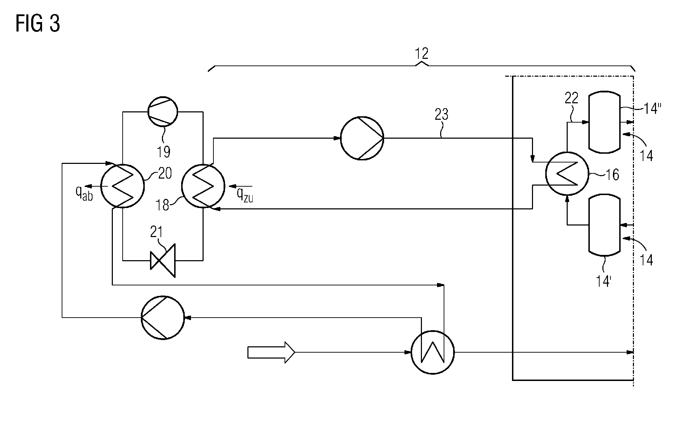

In der Fig. 3 ist eine erfindungsgemäße Wärmeanlage 10 in einer dritten Ausführungsform dargestellt. Diese dritte Ausführungsform ähnelt der ersten Ausführungsform, sodass im Folgenden lediglich die Unterschiede ausführlicher beschrieben werden.

Bei dieser dritten Ausführungsform ist der erste Wärmespeicher 14 im ersten Prozessfluidkreislauf 22 und somit im Abwärmekreislauf 12 angeordnet. Der erste Behälter 14' ist vor und der zweite Behälter 14" hinter dem Prozesswärmeübertrager 16 angeordnet. Das erste Prozessfluid kann durch entsprechendes Ansteuern der Ein- und Auslassventile in die Behälter 14', 14" eingefüllt und aus diesen entnommen werden und stellt somit das Speichermedium des ersten Wärmespeichers 14 dar.

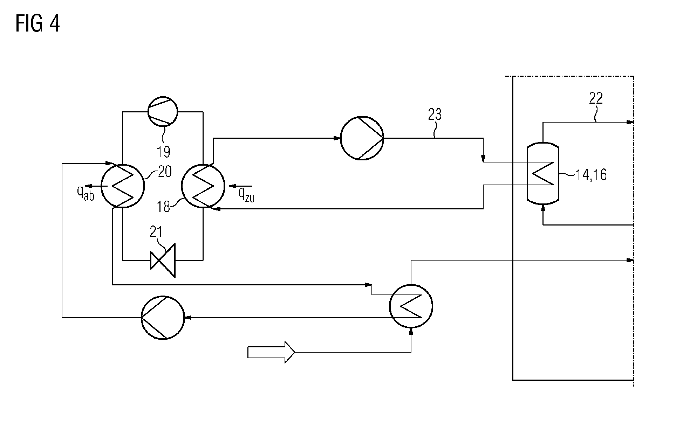

In der Fig. 4 ist eine erfindungsgemäße Wärmeanlage 10 in einer vierten Ausführungsform dargestellt. Diese vierte Ausführungsform ähnelt der zweiten Ausführungsform, sodass im Folgenden lediglich die Unterschiede ausführlicher beschrieben werden.

Bei dieser vierten Ausführungsform ist der erste Wärmespeicher 14 im ersten Prozessfluidkreislauf 22 angeordnet und sind die inneren Rohrschlangen an den Abwärmeträgerkreislauf 23 angeschlossen. Das erste Prozessfluid kann durch entsprechendes Ansteuern der Ein- und Auslassventile in den ersten Wärmespeicher 14 eingefüllt und aus diesen entnommen werden und stellt somit das Speichermedium des ersten Wärmespeichers 14 dar.

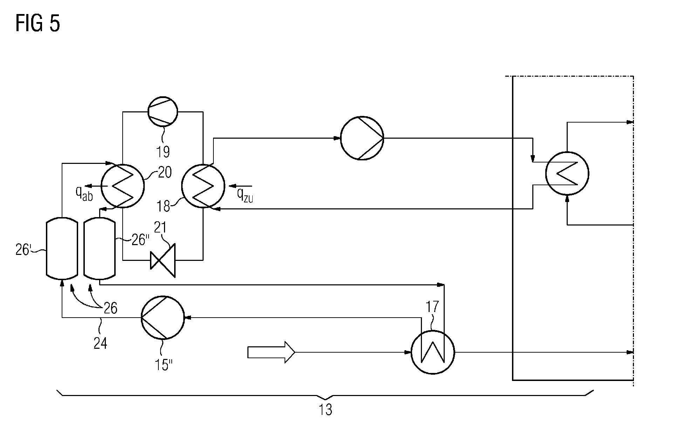

In der Fig. 5 ist eine erfindungsgemäße Wärmeanlage 10 in einer fünften Ausführungsform dargestellt. Diese fünfte Ausführungsform ähnelt der ersten Ausführungsform, sodass im Folgenden lediglich die Unterschiede ausführlicher beschrieben werden.

Bei dieser fünften Ausführungsform umfasst die Wärmeanlage 10 anstelle des ersten Wärmespeichers 14 einen zweiten Wärmespeicher 26, der im Nutzwärmeträgerkreislauf 24 und somit im Nutzwärmekreislauf 13 angeordnet ist. Der Nutzwärmeübertrager 17 ist separat von dem zweiten Wärmespeicher 26 ausgebildet. Der zweite Wärmespeicher 26 umfasst wie der erste Wärmespeicher 14 einen ersten Behälter 26' mit einem Ein- und einem Auslassventil, der zwischen dem Nutzwärmeübertrager 17 und dem Verflüssiger 20 und somit vor dem Verflüssiger 20 angeordnet ist, und einen zweiten Behälter 26" mit einem Ein- und einem Auslassventil, der zwischen dem Verflüssiger 20 und dem Nutzwärmeübertrager 17 und somit hinter dem Verflüssiger 20 angeordnet ist.

Die Steuereinheit ist an die Ein- und Auslassventile der Behälter 26', 26" und somit an den zweiten Wärmespeicher 26 gekoppelt. Der Nutzwärmeträger kann durch entsprechendes Ansteuern der Ein- und Auslassventile und der Pumpe 15'' in die Behälter 26', 26" eingefüllt und aus diesen entnommen werden und stellt somit das Speichermedium des zweiten Wärmespeichers 26 dar.

Die Steuereinheit ist derart ausgebildet, dass sie die Ein- und Auslassventile des zweiten Wärmespeichers 26 in Abhängigkeit von einem Zeitplan und einem Stromtarif und dem aktuellen Strompreis ansteuert.

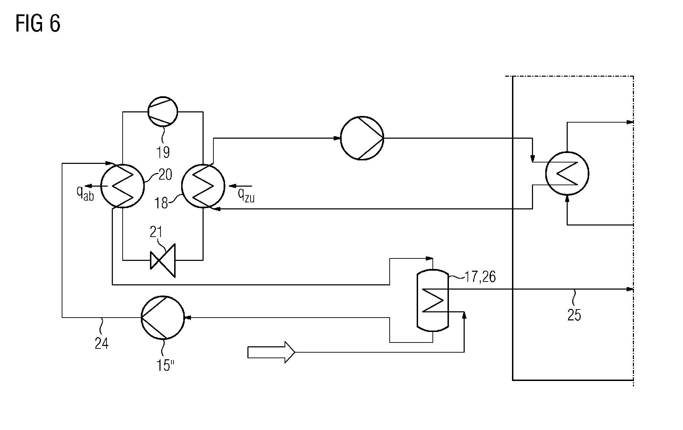

In der Fig. 6 ist eine erfindungsgemäße Wärmeanlage 10 in einer sechsten Ausführungsform dargestellt. Diese sechste Ausführungsform ähnelt der fünften Ausführungsform, sodass im Folgenden lediglich die Unterschiede ausführlicher beschrieben werden.

Bei dieser sechsten Ausführungsform umfasst der zweite Wärmespeicher 26 lediglich einen Behälter mit einem Ein- und einem Auslassventil, die an die Steuereinheit angekoppelt sind, und innere Rohrschlangen, die in dem Behälter angeordnet und an den zweiten Prozessfluidkreislauf 25 angeschlossen sind. Somit bildet und enthält der zweite Wärmespeicher 26 den Nutzwärmeübertrager 17. Der zweite Wärmespeicher 26 ist als Schichtspeicher ausgebildet.

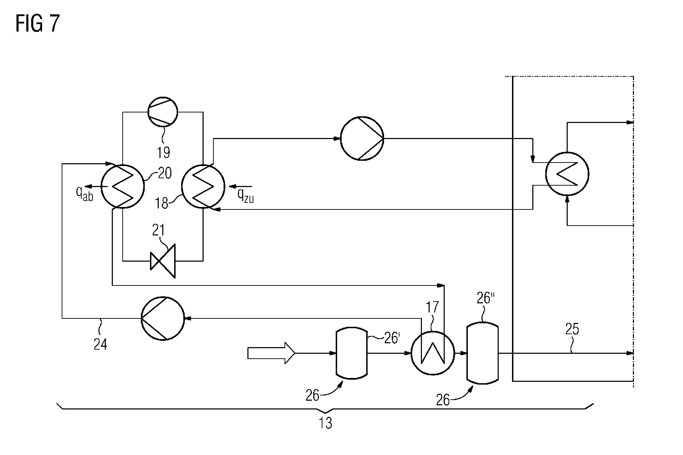

In der Fig. 7 ist eine erfindungsgemäße Wärmeanlage 10 in einer siebenten Ausführungsform dargestellt. Diese siebente Ausführungsform ähnelt der fünften Ausführungsform, sodass im Folgenden lediglich die Unterschiede ausführlicher beschrieben werden.

Bei dieser siebenten Ausführungsform ist der zweite Wärmespeicher 26 im zweiten Prozessfluidkreislauf 25 und somit im Nutzwärmekreislauf 13 angeordnet. Der erste Behälter 26' ist vor und der zweite Behälter 26" hinter dem Nutzwärmeübertrager 17 angeordnet. Das zweite Prozessfluid kann durch entsprechendes Ansteuern der Ein- und Auslassventile in die Behälter 26', 26" eingefüllt und aus diesen entnommen werden und stellt somit das Speichermedium des zweiten Wärmespeichers 26 dar.

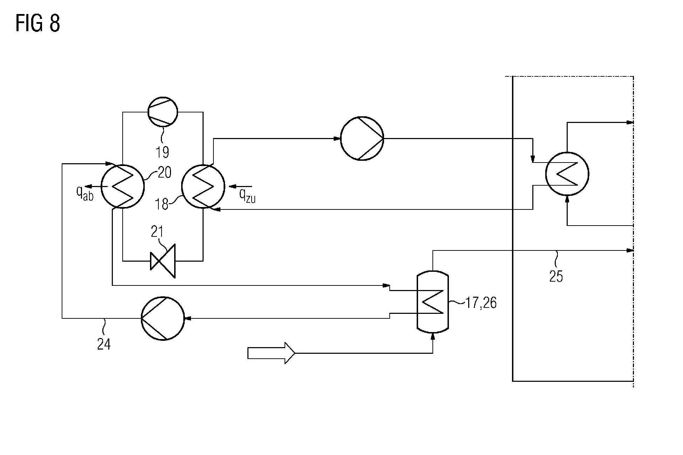

In der Fig. 8 ist eine erfindungsgemäße Wärmeanlage 10 in einer achten Ausführungsform dargestellt. Diese achte Ausführungsform ähnelt der sechsten Ausführungsform, sodass im Folgenden lediglich die Unterschiede ausführlicher beschrieben werden.

Bei dieser achten Ausführungsform ist der zweite Wärmespeicher 26 im zweiten Prozessfluidkreislauf 25 angeordnet und sind die inneren Rohrschlangen an den Nutzwärmeträgerkreislauf 24 angeschlossen. Das zweite Prozessfluid kann durch entsprechendes Ansteuern der Ein- und Auslassventile in den zweiten Wärmespeicher 26 eingefüllt und aus diesen entnommen werden und stellt somit das Speichermedium des zweiten Wärmespeichers 26 dar.

Jede der Ausführungsformen kann nach Bedarf mit wenigstens einer der übrigen Ausführungsformen kombiniert werden. Insbesondere kann jede der fünften bis achten Ausführungsformen nach Bedarf mit wenigstens einer der ersten bis vierten Ausführungsformen kombiniert werden.

## Patentansprüche

1. Wärmeanlage (10), umfassend
- eine Wärmepumpe (11) umfassend
• einen Verdampfer (18),
• einen elektrisch angetriebenen Verdichter (19),
• einen Verflüssiger (20);
- einen Abwärmekreislauf (12), der an den Verdampfer (18) gekoppelt ist;
- einen Nutzwärmekreislauf (13), der an den Verflüssiger (20) gekoppelt ist;
**gekennzeichnet durch**
- wenigstens einen Wärmespeicher (14, 26);
wobei
- wenigstens einer (14) der Wärmespeicher im Abwärmekreislauf (12) und/oder wenigstens einer (26) der Wärmespeicher im Nutzwärmekreislauf (13) angeordnet ist.

2. Wärmeanlage (10) nach Anspruch 1, wobei
- ein erster Wärmespeicher (14) im Abwärmekreislauf (12) angeordnet ist;
- der Abwärmekreislauf (12) durch einen ersten Prozessfluidkreislauf (22) gebildet wird, in dem ein Prozessfluid fließt;
- das Prozessfluid das Speichermedium des ersten Wärmespeichers (14) darstellt.

3. Wärmeanlage (10) nach einem der vorherigen Ansprüche, weiter umfassend
- einen Prozesswärmeübertrager (16);
wobei
- ein erster Wärmespeicher (14) im Abwärmekreislauf (12) angeordnet ist;
- der Abwärmekreislauf (12) durch einen ersten Prozessfluidkreislauf (22), in dem ein Prozessfluid fließt, und einen Abwärmeträgerkreislauf (23) gebildet wird, in dem ein Abwärmeträger fließt;
- der Prozesswärmeübertrager (16) an den ersten Prozessfluidkreislauf (22) und den Abwärmeträgerkreislauf (23) gekoppelt ist;
- der Abwärmeträger oder das Prozessfluid das Speichermedium des ersten Wärmespeichers (14) darstellt.

4. Wärmeanlage (10) nach Anspruch 3, wobei
- der erste Wärmespeicher (14) den Prozesswärmeübertrager (16) bildet oder enthält.

5. Wärmeanlage (10) nach Anspruch 3, wobei
- der Prozesswärmeübertrager (16) separat von dem ersten Wärmespeicher (14) ausgebildet ist;
- der erste Wärmespeicher (14) im ersten Prozessfluidkreislauf (22) oder im Abwärmeträgerkreislauf (23) angeordnet ist.

6. Wärmeanlage (10) nach einem der vorherigen Ansprüche, wobei
- ein zweiter Wärmespeicher (26) im Nutzwärmekreislauf (13) angeordnet ist;
- der Nutzwärmekreislauf (13) durch einen zweiten Prozessfluidkreislauf (25) gebildet wird, in dem ein Prozessfluid fließt;
- das Prozessfluid das Speichermedium des zweiten Wärmespeichers (26) darstellt.

7. Wärmeanlage (10) nach einem der vorherigen Ansprüche, weiter umfassend
- einen Nutzwärmeübertrager (17);
wobei
- ein zweiter Wärmespeicher (26) im Nutzwärmekreislauf (13) angeordnet ist;
- der Nutzwärmekreislauf (13) durch einen Nutzwärmeträgerkreislauf (24), in dem ein Nutzwärmeträger fließt, und einen zweiten Prozessfluidkreislauf (25) gebildet wird, in dem ein Prozessfluid fließt;
- der Nutzwärmeübertrager (17) an den Nutzwärmeträgerkreislauf (24) und den zweiten Prozessfluidkreislauf (25) gekoppelt ist;
- der Nutzwärmeträger oder das Prozessfluid das Speichermedium des zweiten Wärmespeichers (26) darstellt.

8. Wärmeanlage (10) nach Anspruch 7, wobei
- der zweite Wärmespeicher (26) den Nutzwärmeübertrager (17) bildet oder enthält.

9. Wärmeanlage (10) nach Anspruch 7, wobei
- der Nutzwärmeübertrager (17) separat von dem zweiten Wärmespeicher (26) ausgebildet ist;
- der zweite Wärmespeicher (26) im zweiten Prozessfluidkreislauf (25) oder im Nutzwärmeträgerkreislauf (24) angeordnet ist.

10. Wärmeanlage (10) nach einem der vorherigen Ansprüche, weiter umfassend
- eine Steuereinheit, die mit dem Verdichter (19) verbunden ist.

11. Wärmeanlage (10) nach Anspruch 10, wobei
- die Steuereinheit derart ausgebildet ist, dass sie den Verdichter (19) in Abhängigkeit von einem Zeitplan und/oder einem Stromtarif ansteuert.

12. Wärmeanlage (10) nach Anspruch 10 oder 11, wobei
- die Steuereinheit eine Kommunikationsschnittstelle zu einer Strompreisquelle umfasst, die einen aktuellen Strompreis bereitstellt;
- die Steuereinheit derart ausgebildet ist, dass sie den Verdichter (19) in Abhängigkeit von dem aktuellen Strompreis ansteuert.

13. Wärmeanlage (10) nach einem der Ansprüche 10 bis 12, wobei
- die Steuereinheit eine Kommunikationsschnittstelle zu einer Strompreisquelle umfasst, die die zukünftigen Strompreise für einen zukünftigen vorbestimmten Zeitraum bereitstellt;
- die Steuereinheit derart ausgebildet ist, dass sie zumindest den Verdichter (19) in Abhängigkeit von den zukünftigen Strompreisen ansteuert.

14. Wärmeanlage (10) nach Anspruch 13, wobei
- die Steuereinheit derart ausgebildet ist, dass sie
• eine Strompreisprognose unter Verwendung der zukünftigen Strompreise erstellt;
• ein zeitliches Modell der Wärmequelle und der Wärmesenke enthält;
• einen Fahrplan für den Verdichter (19) auf Basis der Strompreisprognose sowie des zeitlichen Modells der Wärmequelle und der Wärmesenke erstellt
• zumindest den Verdichter (19) entsprechend dem Fahrplan ansteuert.

15. Wärmeanlage (10) nach Anspruch 14, wobei
- die Steuereinheit derart ausgebildet ist, dass sie
• ein zeitliches Modell der Wärmespeicher (14, 26) enthält;
• den Fahrplan für den Verdichter (19) auf Basis des zeitlichen Modells der Wärmespeicher (14, 26) erstellt.

16. Verfahren zum Betreiben einer Wärmeanlage (10), wobei die Wärmeanlage (10) umfasst
- eine Wärmepumpe (11) umfassend
einen Verdampfer (18),
einen elektrisch angetriebenen Verdichter (19),
einen Verflüssiger (20);
- einen Abwärmekreislauf (12), der an den Verdampfer (18) gekoppelt ist;
- einen Nutzwärmekreislauf (13), der an den Verflüssiger (20) gekoppelt ist;
wobei
- der Verdichter (19) diskontinuierlich betrieben wird;
- bei stehendem Verdichter (19) Abwärme aus dem Abwärmekreislauf (12) gespeichert und/oder gespeicherte Nutzwärme in den Nutzwärmekreislauf (13) gespeist wird;
- bei laufendem Verdichter (19) gespeicherte Abwärme in den Abwärmekreislauf (12) gespeist und/oder Nutzwärme aus dem Nutzwärmekreislauf (13) gespeichert wird.

17. Verfahren nach Anspruch 16, wobei
- der Verdichter (19) in Abhängigkeit von einem Zeitplan und/oder einem Stromtarif betrieben wird.

18. Verfahren nach Anspruch 16 oder 17, wobei
- von einer Strompreisquelle regelmäßig ein aktueller Strompreis abgefragt wird;
- der Verdichter (19) in Abhängigkeit von dem aktuellen Strompreis betrieben wird.

19. Verfahren nach einem der Ansprüche 16 bis 18, wobei
- von einer Strompreisquelle die zukünftigen Strompreise für einen zukünftigen vorbestimmten Zeitraum abgefragt werden;
- zumindest der Verdichter (19) in Abhängigkeit von den zukünftigen Strompreisen betrieben wird.

20. Verfahren nach Anspruch 19, wobei
- eine Strompreisprognose unter Verwendung der zukünftigen Strompreise erstellt wird;
- ein zeitliches Modell der Wärmequelle und der Wärmesenke bereitgestellt wird;
- ein Fahrplan für den Verdichter (19) auf Basis der Strompreisprognose sowie des zeitlichen Modells erstellt wird;
- zumindest den Verdichter (19) entsprechend dem Fahrplan betrieben wird.

21. Verfahren nach Anspruch 20, wobei
- ein zeitliches Modell der Wärmespeicher (14, 26) bereitgestellt wird;
- der Fahrplan für den Verdichter (19) auf Basis des zeitlichen Modells der Wärmespeicher (14, 26) erstellt wird.
